# EUROPEAN PATENT SPECIFICATION

(11) **EP 3 078 259 B1**
(45) Date of publication and mention of the grant of the patent: **07.03.2018**
(21) Application number: 16164333.3
(22) Date of filing: 07.04.2016
(51) Int. Cl.: A01F 15/08

(54) **SYNCHRONIZATION MECHANISM**
SYNCHRONISATIONSMECHANISMUS
MÉCANISME DE SYNCHRONISATION

(30) Priority: 10.04.2015 BE 201505233
(43) Date of publication of application: 12.10.2016
(73) Proprietor: CNH Industrial Belgium nv, 8210 Zedelgem (BE)
(72) Inventor: NAEYAERT, Karel, 8210 Loppem (BE); VANDE RYSE, Johan A.E., 8000 Brugge (BE); VANPOUCKE, Johan O., 8210 Veldegem (BE); VERHAEGHE, Didier, 8900 Ieper (BE); SCHOONHEERE, Marnix J., 8480 Ichtegem (BE)
(74) Representative: CNH Industrial IP Department

(56) References cited:
- US-A1- 2002 174 781
- US-A1- 2007 245 704
- US-B1- 6 474 228

## Description

The present invention relates to an agricultural baler. Preferably the present invention relates to a square agricultural baler, which is provided for gathering crop material, forming slices of crop material from the gathered crop material, and pressing square bales from the slices (see e.g. US-A-2002/174781). Agricultural balers typically comprise two main parts used in the formation of the bales, being a pre-compression chamber and a baling chamber. Crop material is gathered and pushed into the pre-compression chamber, where a slice of crop material is formed. Pre-compression chamber is linked to the baling chamber in such a manner that the slice of crop material can periodically be transferred into the baling chamber. In the baling chamber, a plunger reciprocally moves, thereby pressing a square bale from subsequently feeded slices.

The plunger movement is powered via a main shaft driven by a motor. Thereby, the motor can be a part of the baler, or can be a part of the puller (tractor) connected to the baler via a power take-off (PTO). In practice, this reciprocal movement of the plunger is often considered the most dominant movement in the baler, dominant meaning that other movements are made relative to this movement of the plunger. The reason is that the plunger movement requires the highest force (highest relative to other forces needed for operating the baler). Off all movements in the baler, the movement of the plunger shows the highest inertia.

The pre-compression chamber is adapted for receiving gathered crop material. To this end, the pre-compression chamber shows an inlet. The pre-compression chamber furthermore shows an outlet towards the baling chamber. Between the inlet and the outlet, a channel is defined in which crop material can gather into a slice of crop material. The pre-compression chamber comprises a slice pushing mechanism provided for pushing a slice of crop material formed in the pre-compression chamber through the outlet of the pre-compression chamber into the baling chamber. The sliced crop material is typically pushed in a first segment of the baling chamber. First segment is typically located directly behind the plunger (the plunger being in the withdrawn position). Thereby the slice of crop material is pushed in the baling chamber, after which the plunger can propel the crop material into the baling chamber, thereby pushing the most recently entered slice into the baling chamber, making it a part of the square bale.

The pre-compression chamber comprises, for the purpose of pushing the slice into the baling chamber, a slice pushing mechanism. Different types of slice pushing mechanisms are known, among which fingers grasping behind the slice and pushing the slice through the outlet, or a set of conveyer belts in between which the slice is formed, and which conveyer belts are driven to push the slice through the outlet.

The slice pushing mechanism is driven via a driving mechanism that is operationally linked to the plunger driving mechanism. A synchronized movement between slice pushing mechanism and the plunger is needed to ensure a proper operation of the baler. Namely, only when the plunger is withdrawn, a slice can be pushed in the baling chamber. In practice, different synchronization types are possible among which a one/one synchronization, meaning that every withdrawal of the plunger a new slice is entered into the baling chamber, or a one/two synchronization, meaning that every other withdrawal of the plunger a new slice is entered, thus the plunger moves forth and back two times for each slice. Other synchronization timing such as one/three, one/four,... are also possible.

Synchronization is in practice realized by mechanically linking the plunger driving mechanism and the slice pushing driving mechanism. Such mechanical link ensures proper synchronization, as the slice pushing mechanism is mechanically driven by the plunger movement, it cannot move out of synchronization.

A drawback relates to so called top fill. Top fill is a measure for the uniformity of the slice after it has entered the first segment of the baling chamber. It will be recognized that a non uniform fill, for example where the lower part of the first segment is more dense than an upper part, results in an inferior bale. Such top fill has an effect that a bale is high dense at the lower end, and not dense at the top, resulting in a unstable bale that is likely to show a substantial deviation from the ideal square form. Such bale will bend like a banana resulting in a weirdly shaped bale. A negative top fill also results in a substantial wear of the plunger and baling chamber, as forces are not equally transmitted. The plunger will feel a substantially high resistance at the lower part of the plunger compared to the upper part resistance of the plunger. This will create a torque force exerted to the plunger which has to be borne by the plunger driving mechanism. When the ideal top fill can be obtained, a bale can be formed with nearly ideal outer dimensions and shape, and excessive wear on the baler mechanism can be avoided. In prior art balers, the ideal top fill is obtained by controlling the slice forming process in the pre-compression chamber. By obtaining a slice in which the crop material is evenly spread over the slice, after which the slice is pushed into the baling chamber, an acceptable top fill can be obtained.

A drawback of the existing top fill controlling mechanisms is that a deviation of the top fill can still occur depending on the baling speed and the type of crop material (hay, straw, silage, ...).

It is an object of the present invention to provide a baler where top fill is controllable in a more accurate manner.

To this end, the invention provides an agricultural baler comprising a baling chamber and a pre-compression chamber, wherein the pre-compression chamber is adapted to gather crop material and to periodically form a slice of said crop material and push the slice towards the baling chamber into a first segment of the baling chamber, the baling chamber comprising a plunger provided for reciprocally moving in the baling chamber thereby compressing slices of crop material into a bale, wherein a slice-presence-detecting sensor is provided in an upper region of said first segment, an output of such sensor being operationally connected to controller which is adapted to adjust a synchronization between the periodically forming and pushing and the reciprocal movement.

Via a slice-presence-detecting sensor, the presence of the slice in the upper region of the baling chamber can be detected. Where conventionally the moment of pushing the slice by the pre-compression chamber determines the synchronization, now the effective moment of arrival of the slice can be used for synchronization. Practical tests have shown that the relationship between the moment of pushing of the slice and the effective moment of arrival of the slice in the first segment of the baling chamber can deviate. Some crop material move faster through the output of the pre-compression chamber at a certain slice pushing mechanism speed, than other crop material. As a result, the faster crop material arrives sooner at the upper region of the first segment of the baling chamber. A controller is provided which is adapted to adjust the synchronization between the reciprocal movement of the plunger and the forming and pushing of the slice in the pre-compression chamber, based upon a measurement of the sensor. Thereby, the slice presence detecting sensor connected to the controller, adapted to adjust the synchronization, provides in a mechanism to optimize top fill in the baling chamber by adjusting arrival timing of the slice in the baling chamber with respect to the plunger movement.

Preferably the controller is adapted to adjust the synchronization timing of the periodically forming and pushing of the pre-compressing chamber with respect to the reciprocal movement of the plunger. Since the reciprocal movement of the plunger is typically considered the dominant movement in the baler, adjustments are preferably made to the pre-compression chamber operation. By adjusting the timing of synchronization, synchronization is fine-tuned depending on the measurement of the sensor.

Preferably, the slice-presence-detecting sensor is mounted at the top surface of the first segment of the baling chamber to detect the arrival of the slice at said top surface. Mounting the sensor at a top surface is both technically simple and proves to be the optimal measurement location.

Preferably multiple slice-presence-detecting sensors are mounted at different heights in the first segment of the baling chamber. Such sensors can be mounted for example at a side wall of the first segment of the baling chamber. Measuring the presence of the slice at different heights enables to obtain speed information, and, when three or more sensors are used, acceleration information of the slice in the first segment. This speed and/or acceleration information can be further used to determine the top fill, and to steer the controller to obtain a preferred top fill.

Preferably the slice-presence-detecting sensor is formed as a force sensor so that, in addition to the presence, also the force of contact between the slice and the first segment is measurable. The force of arrival of a slice is an indication of a deformation of the slice in the first segment of the baler. A slice that is pushed through the output of the pre-compression chamber with a high force so that it arrives at the upper region with a high impact, has as a result that the package will be more compressed at the upper region of the baling chamber than at the lower region, due to the impact. This information can further be used to adjust the synchronization between the pre-compression chamber pushing and the plunger movement in order to obtain a predetermined (desired) top fill.

Preferably, the pre-compression chamber comprises an inlet and an outlet, the baler comprising a feeder for feeding crop material in to said inlet, wherein said outlet opens towards said first segment, said pre-compression chamber comprising a pushing mechanism for pushing said slice through said outlet into said baling chamber, whereby said controller is provided for controlling the timing of said pushing mechanism. Such pre-compression chambers are known to the skilled person. Therefore it is easy for a skilled person to control such known pre-compression chamber with the controller thereby adjusting the timing of the pushing mechanism based on the sensor.

Preferably the pre-compression chamber comprises two conveyors defining a channel between the inlet and the outlet, the two conveyors being provided to form said slice and to act as said pushing mechanism. Typically the two conveyors are driven by hydraulic or electric motors. The latter can be steered by the controller to adjust timing, particularly of the pushing action of the conveyors. In this manner, the timing of arrival of the slice in the baling chamber can be influenced by adjusting the conveyor timing.

Preferably, as an alternative to the conveyor embodiment described above, the pushing mechanism is formed as a set of fingers provided for grasping behind the slice of crop material at the inlet of the pre-compression chamber and for pushing the slice through the outlet by moving the fingers towards the outlet. Such pushing mechanism proved to be an efficient and well controllable mechanism for transferring a slice of crop material formed in a pre-compression chamber into the baling chamber.

Preferably the plunger driving mechanism is mechanically connected to a slice pushing driving mechanism to synchronize the latter, the mechanical connection comprising an intermediary element steerable via said controller. In prior art balers, a mechanical connection is often provided between the plunger driving mechanism and the slice pushing driving mechanism. This mechanical connection ensures a correct synchronized movement between the plunger and the crop pushing mechanism. This prevents the crop pushing mechanism from pushing a slice of crop material into the baling chamber if the baling chamber is not ready to receive the slice crop material (for example when the plunger is in its extended position thereby closing off the first segment of the baling chamber). By providing a coupling element in the mechanical connection, the synchronization timing can be adjusted. Thereby, the synchronization can be fine-tuned meaning that the moment of arrival of the slice of crop material into the first segment of the baling chamber can be somewhat shifted. Thereby, the mechanical connection is maintained ensuring a correct synchronization (in the broad sense of synchronization) while enabling the controller to adjust the synchronization (thereby obtaining a fine-tuned synchronization).

Preferably the intermediary element is formed as a planetary gearbox. A planetary gearbox is known for linking three rotational movements (respectively via the center gear, the planet gears and the ring gear). Therefore the planetary gearbox can be used in the present case to link the plunger driving mechanism, the slice pushing driving mechanism, and the controller. Thereby, when the controller stands still, there is a constant predictable link between rotational speed of the plunger driving mechanism and the slice pushing driving mechanism, meaning that the relative movement of one with respect to the other is fixed. Thereby, because of the fixed relative movement, the synchronization timing is also fixed. By operating the controller, connected to the planetary gearbox, the relative position of the plunger driving mechanism and the slice pushing driving mechanism changes. Thereby, synchronization optimization is made possible. A skilled person can, based on the principles explained in this disclosure, test and/or determine several planetary gearbox constructions, and can test and/or determine the influence of the controller to the synchronization timing.

Preferably, the intermediary coupling element is formed as a two part gearbox, the first part connecting one end via straight gear coupling, the second part connecting the other end via a helical gear coupling. Such two part gearbox is known in the art for amending the relative position of two shafts while connecting the shafts in a rotational movement. When the two part gearbox is in a fixed position, the two shafts are directly connected to one another. Thereby, rotational movement and forces can be transmitted from one shaft to another. By displacing the gearbox along its longitudinal axis, the relative position of the two shafts is amended. This is because the one end (via the straight gear coupling) remains its axial position with respect to the shaft connected to that one end, while the axial position of the second part (connected via the helical gear coupling) is changed with respect to the second shaft connected to that other end. Thereby, synchronization can be adjusted and amended synchronization timing can be obtained via such two part gearbox.

Preferably the intermediary coupling element is adapted to adjust the relative position of the plunger driving mechanism and the slice pushing driving mechanism. By adjusting the relative position of the plunger driving mechanism and the slice pushing driving mechanism, the timing is adjusted. Preferably an actuator is connected to the intermediary coupling element to control the latter.

The invention will now be described in more details with respect to the drawings illustrating some preferred embodiments of the invention. In the drawings:
figure 1 shows a schematic representation of a baling chamber and pre-compression chamber;
figure 2 shows some top-fill possibilities;
figure 3 shows an alternative schematic representation of a baling chamber and pre-compression chamber;
figure 4 shows a gearbox suitable for coupling the baling chamber movement and the pre-compression chamber movement; and
figure 5 shows the influence of the gearbox in the movement of the pre-compression chamber elements.

In the drawings a same reference number has been allocated to a same or analogous element.

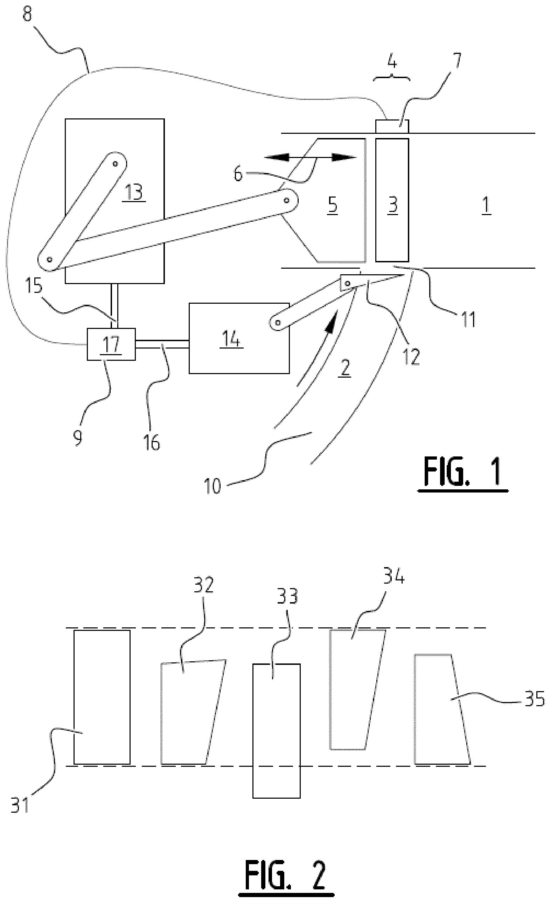

Figure 1 shows a schematic representation of main inside elements of an agricultural baler. The figure 2 shows a baling chamber 1 and a pre-compression chamber 2. The pre-compression chamber opens in the baling chamber to push a slice of crop material 3 in a first segment 4 of the baling chamber 1.

The baling chamber comprises a plunger 5 which is provided for reciprocally moving in the baling chamber. The reciprocal movement is indicated by arrow 6. To this end, the plunger 5 is driven by a plunger driving mechanism 13. The connection between the plunger driving mechanism 13 and the plunger 5 is schematically represented by a pair of arms, however other driving mechanisms can be used as well for driving the plunger 5 in the reciprocal movement 6.

The pre-compression chamber 2 comprises a slice pushing mechanism 12. The slice pushing mechanism 12 is driven by a slice pushing driving mechanism 14. Preferably, the slice pushing driving mechanism 14 is mechanically connected to the plunger driving mechanism 13. Such mechanical connection ensures a synchronized movement between the plunger 5 and the slice pushing mechanism 12.

It will be clear that synchronization between the slice pushing mechanism 12 of the pre-compression chamber, and the reciprocal movement 6 of the plunger 5 is important for a correct operation of the baler. In the reciprocal movement of the plunger 5, the plunger moves over at least a part of the first segment 4 of the baling chamber 1. Therefore, for being able to push a slice of crop material 3 into the baling chamber 1, the plunger 5 is preferably somewhere in a withdrawn position in the reciprocal movement. Otherwise the first segment 4 is not open for receiving a slice of crop material 3.

The pre-compression chamber preferably comprises an inlet 10 and an outlet 11. The outlet 11 opens toward the first segment 4 of the baling chamber 1, so that a slice of crop material 3 formed in the pre-compression chamber 2 can be pushed through the outlet 11 into the baling chamber 1. The inlet 10 of the pre-compression chamber 2 is preferably connected to crop gathering means (not shown) provided for gathering crop material and pushing the gathered crop material into the pre-compression chamber 2 via the inlet 10.

The mechanical connection between the plunger driving mechanism 13 and the slice pushing driving mechanism 14 is schematically represented by the elements 15, 16 and 17 in figure 1.

An important aspect in the formation of a nice square bale via the agricultural baler, is the top fill. Figure 2 illustrates some possibilities regarding top fill. Top fill is defined as the distribution of crop material over the first segment 4 area at the moment that the plunger hits the slice of crop material in its forward movement. In an ideal situation, as is illustrated by slice 31, the crop material is evenly distributed over the complete area of the first segment 4 of the baling chamber 1. However, this ideal situation cannot always be achieved. At lower baling speed, it is possible that a slice of crop material 3 that is formed in the pre-compression chamber 2 has a density that is too low to keep the slice 3 in shape. The effect is that the slice of crop material shrinks in the first segment 4 of the baling chamber 1, thereby resulting in a slice as is shown in figure 2 with reference number 32 or reference number 35. Pressing a bale with slices formed like that, results in an uneven distribution of load to the plunger and results in bales having shapes that deviate from the ideal rectangular shape. In another case, a wrong synchronization between the slice pushing mechanism and the plunger could result in a slice that is not yet completely pushed in the first segment of the baling chamber when the plunger hits the slice, or has already fallen back (due to gravity) because the slice pushing mechanism withdrew too early. In such situation, a slice as is shown in figure 2 by reference number 33 is compressed by the plunger. Compressing such a slice again results in the above described problems. In fast working balers, another problem might arise where the slice pushing mechanism pushes the slice in the first segment of the baling chamber with such force that the slice deforms because it bumps into the top wall of the baling chamber 1. Such situation results in a slice as is shown in figure 2 with reference number 34. Again, such slice results in excessive wear of the baler elements because of unbalanced load, and results in bad bales.

Figure 1 shows a sensor 7 that is placed in an upper region of the first segment 4 of the baling chamber 1. The sensor 7 is adapted to measure a presence of a slice 3 in the first segment 4 of the baling chamber 1. Therefore this sensor is referred to as slice presence detecting sensor. Such slice presence detecting sensor 7 can be formed in different manners such as ultrasonic sensor, infrared sensor, contact sensor, optical sensor or other known sensors. Preferably, the slice presence detecting sensor 7 is formed as a force sensor adapted to measure a contact force. With such force sensor, not only the presence of the slice can be measured, but also the force with which the slice arrives at the sensor can be measured. Such force can be indicative for slice deformation (a slice arriving at the sensor with a high force undergoes a high acceleration which can result in a deformation of the slice).

The slice presence detecting sensor 7 is operationally coupled 8 to a controller 9. The controller 9 is adapted to adjust synchronization between the reciprocal plunger movement 6 and the slice pushing movement of the pre-compression chamber 2. In the example of figure 1, a mechanical connection is established between plunger driving mechanism and the slice pushing driving mechanism 14 via respective plunger shaft 15 and slice pushing mechanism shaft 16 which are connected via a gearbox 17. The gearbox 17 is adapted for adjusting the rotation ratio between the plunger axis 15 and the slice pushing mechanism axis 16, thereby adjusting synchronization between reciprocal plunger movement 6 and the slice pushing movement of the pre-compression chamber 2. The controller 9 is adapted to control the gearbox 17 based on the input of the slice presence detecting sensor 7.

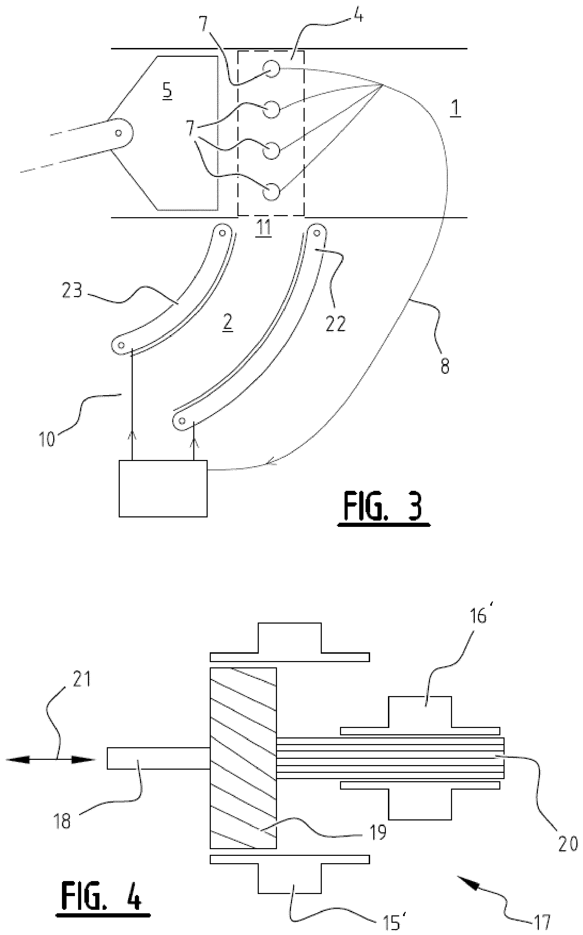

Figure 4 shows an example of a gearbox 17 that is suitable for adjusting synchronization between a first and a second rotating shaft. The gearbox 17 comprises helical input gear 15' and a straight output gear 16'. In the example of figure 4 and figure 1, the helical input gear 15' is coupled to the plunger shaft 15 and the straight output gear 16' is coupled to the slice pushing mechanism shaft 16. The input gear 15' and output gear 16' are connected via an intermediary gear 18 showing two parts. A first part comprises a helical gear 19 complementary to the helical input gear 15', and the second part shows a straight gear 20 complementary with the straight output gear 16'. Thereby, in a fixed position, the intermediary gear transmits the rotation of the input shaft connected to the input gear 15' directly in a one-to-one ratio to the output shaft connected to the output gear 16'. The first part 19 and the second part 20 of the intermediary gear are preferably integrally formed in such a matter that one end of the intermediary gear comprises the helical gear and the opposite end comprises the straight gear 20. The helical gear and the straight gear are formed around a single longitudinal axis of the intermediary gear element. Preferably the helical gear diameter is larger than the straight gear diameter. More preferably, the helical gear diameter is larger than two times the straight gear diameter. The intermediary gear element is provided to move along its longitudinal axis between a first and a second position. In figure 4, the intermediary gear element is shown in its most leftward position, and can be shifted to the right. By moving the intermediary gear element along its longitudinal axis, the relative position of the input gear 15' and the output gear 16' changes. Thereby, synchronization between the input gear 15' and output gear 16' respectively coupled to the plunger driving mechanism and the slice pushing driving mechanism, can be amended and fine-tuned while maintaining an overall synchronization (as the shafts are mechanically coupled). Such fine-tuning is achieved by moving the intermediary gear element 18 along its longitudinal axis. Such movement is indicated in figure 4 by reference number 21.

Alternatively to a gearbox as shown in figure 4, a planetary gearbox (not shown) can be used to adjust synchronization between the plunger shaft 15 and the slice pushing driving mechanism shaft 16. A planetary gearbox is known for connecting three shafts. The center wheel, the ring wheel and the planetary wheels form the shaft connecting element. Thereby, the plunger shaft 15 and slice pushing driving mechanism 16 can each be connected to one of the three gear elements of the planetary gearbox. A controller can be connected to the third gear of the planetary gearbox. The gearbox can be so configured that a standing still controller results in a ratio between input axis and output axis (in the present case the plunger shaft 15 and slice pushing driving mechanism shaft 16) that is fixed and predetermined so that synchronization is achieved. A rotation of the controller, rotating the third gear of the planetary gearbox, amends the relative position of the input shaft and output shaft, thereby adjusting the synchronization. A skilled person, given the information above, can configure a planetary gearbox in different manners to serve the purpose of the present invention.

By adjusting synchronization between the reciprocal plunger movement 6 and the slice pushing movement of the slice pushing mechanism 12, the timing of insertion of a slice 3 with respect to the plunger movement 6 can be adjusted and thereby optimized. Also the speed of pushing the slice into the first segment of the baling chamber can be adjusted and optimized.

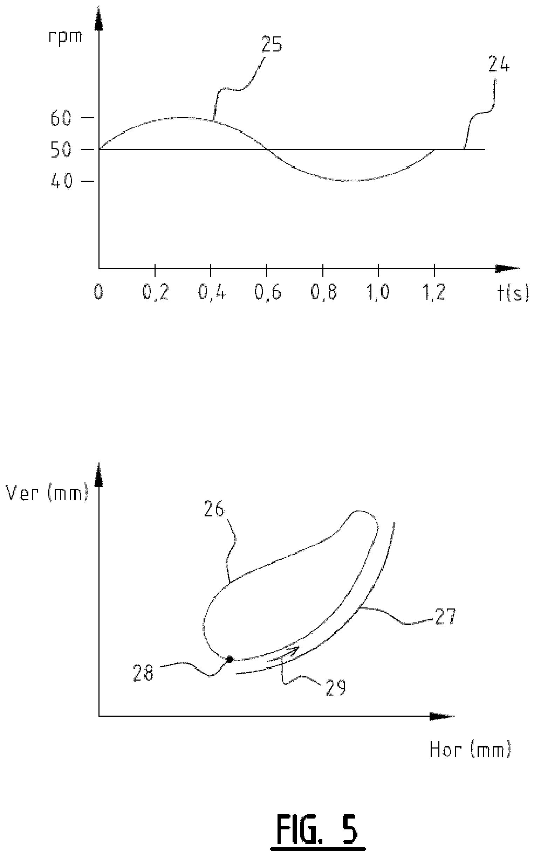

Figure 5 shows two graphical representations of the slice pushing movement. The lower graph shows the movement that the slice pushing mechanism tip makes in time, and shows on the horizontal axis the horizontal movement in millimeters and on the vertical axis the vertical movement in millimeters. Starting at point 28, the tip is displaced in the direction indicated by arrow 29 and grasps behind the slice to push the slice through the outlet into the baling chamber. The pushing movement is indicated by reference number 27. In the rest of the movement 26, the tip withdraws, and in the withdrawn position, moves back to the starting point 28 where the tip can push a new slice in a subsequent period. The upper part of figure 5 shows the transmission of rotational movement between the plunger shaft and the slice pushing mechanism shaft over the time. In the figure, as an example, the slice pushing period takes 1.2 seconds, meaning that every 1.2 second a new slice of crop material is pushed into the baling chamber. Using a fixed connection between the plunger shaft 15 and the slice pushing mechanism shaft 16, a rotation is transmitted from one to the other shaft in a flat manner as is indicated by reference number 24. This route results in a slice pushing mechanism tip moving along the path 26 with a constant speed (constant speed meaning that every period, in every sub-segment of the movement, the tip follows the path with an identical distance over time ratio). Thereby, the speed of the segment 27 of the path of movement 26 cannot be adjusted. Using a gearbox as described above to connect the plunger shaft and the slice pushing driving mechanism shaft, the synchronization can be adjusted. An example of an adjusted synchronization is indicated with reference number 25. In this example, the first part of the period is speeded up with respect to the second part of the period. Thereby, the slice pushing mechanism tip moves faster over the segment 27 of the movement path 26 than over the rest of the movement path. As a result, the timing of arrival of the slice 3 in the first segment 4 of the baling chamber 1 is adjusted.

Preferably the gearbox 17 comprises an actuator that is steerable via the controller 9. The controller 9 is operationally connected to the slice presence detecting sensor 7. The actuator is preferably coupled to the gearbox in such a manner that the relative position of the plunger shaft with respect to the slice pushing mechanism shaft is adjustable. In the example of the gearbox of figure 4, the actuator is coupled to the intermediary gear element to move the intermediary gear element along it longitudinal axis. In the example of the planetary gearbox, the actuator is coupled to the third of the three gear elements, so that a rotation of the actuator changes the relative position of the plunger shaft (connected to a first of the three gear elements) and the slice pushing mechanism shaft (connected to a second of the three gear elements). The actuator is steerable by the controller, which thereby controls the relative position of the plunger shaft 15 with respect to the slice pushing mechanism shaft 16.

The controller comprises an electrical circuit or an electronic circuit or a programmable electronic circuit or a combination of the above, so that the connector can control the actuator based on the input of the slice presence detecting sensor 7. The controller can comprise an open control loop, or a closed control loop, or a control loop comprising feed forward control commands, or a combination of the above.

Figure 3 shows an alternative configuration of a baling chamber 1 and a pre-compression chamber 2. In the example of figure 3, multiple slice presence detecting sensors are provided in the first segment 4 of the baling chamber 1, each of the sensors being mounted at a different height in the first segment 4 of the baling chamber 1. The slice presence detecting sensor 7 are preferably mounted in at least one of the side walls of the baling chamber 1. Having multiple slice presence detecting sensors at different heights in the first segment 4 of the baling chamber 1 allows to deduce not only an arrival of the slice, but also a speed of the slice, and where at least three sensors are provided, an acceleration or deceleration of the slice in the first segment 4 of the baling chamber 1. This speed and acceleration/deceleration information can be further used by the controller 9 to adjust the synchronization between the reciprocal movement of the plunger and the slice pushing in the pre-compression chamber 2.

Figure 3 also shows an alternative configuration of the pre-compression chamber 2. In the example of figure 3, the pre-compression chamber is defined by two belt conveyers 22, 23 forming a channel between an inlet 10 and an outlet 11. The outlet 11 opens into the baling chamber 1. The inlet 10 is connected to crop gather means which are provided to introduce crop material into the channel defined by the belt conveyers 22 and 23. In such configuration, in the slice forming process, the belt conveyers 22, 23 rotate at a first (low) speed. Once the slice is formed, the belt conveyers 22, 23 accelerate to a second (high) speed thereby throwing the formed slice through the outlet 11 into the first segment 4 of the baling chamber 1. The second speed is higher than the first speed. The belt conveyers 22, 23 are driven by electric or hydraulic engines. These engines can be coupled to one another (for synchronization) or can be driven independently. These engines can be coupled to the plunger driving mechanism for synchronization or can be independent from the plunger driving mechanism. The controller 9 is provided to control the engines driving the belt conveyers 22, 23 so that the timing of arrival of the slice in the first segment 4 of the baling chamber 1 is adjustable. Therefore, the slice presence detecting sensors 7 are operationally connected 8 to the controller 9.

It will be clear that different combinations can be made of baler elements which examples are given in the present description. Also alternative gearboxes could be developed, beside the gearboxes described above which allow to adjust synchronization. Therefore, it is emphasized that the examples described and the figures shown in support of the description are not intended to limit the invention. The scope of the invention shall be solely defined in the appending claims.

In the above description, different embodiments have been described that allow to adjust the timing of arrival of a slice in the first segment 4 of the baling chamber. By adjusting the timing, referring back to figure 2, situations as indicated by reference number 33 can be avoided. Furthermore, deduction of the slice with respect to the ideal shape 31 (deduction such as indicated with reference number 32, 34 and 35) can be minimized. Adjusting the synchronization between the reciprocal plunger movement 6 and the slice pushing movement of the pre-compression chamber 2 implies that at least one of the slice pushing speed and slice pushing timing is controllable and can be amended.

In the present description, crop gathering means or crop gathering mechanism or feeder for feeding crop material refer to the same or at least similar part of the baler.

## Claims

1. An agricultural baler comprising a baling chamber (1) and a pre-compression chamber (2), wherein the pre-compression chamber (2) is adapted to gather crop material and to periodically form a slice (3) of said crop material and push the slice towards the baling chamber (1) into a first segment (4) of the baling chamber (1), the baling chamber (1) comprising a plunger (5) provided for reciprocally moving (6) in the baling chamber (1) thereby compressing slices (3) of crop material into a bale, **characterised in that** a slice-presence-detecting sensor (7) is provided in an upper region of said first segment (4), an output of said sensor (7) being operationally connected to a controller (9) which is adapted to adjust a synchronization between the periodically forming and pushing of the slice (3) in the pre-compression chamber (2) and the reciprocal movement (6) of the plunger (5).

2. The agricultural baler of claim 1, wherein the controller (9) is adapted to adjust a synchronization timing of the periodically forming and pushing of the slice (3) in the pre-compression chamber (2) with respect to the reciprocal movement (6) of the plunger (5).

3. The agricultural baler of claim 1 or 2, wherein the slice-presence-detecting sensor (7) is mounted at a top surface of the first segment (4) of the baling chamber (1) to detect the arrival of the slice (3) at said top surface.

4. The agricultural baler of any one of the previous claims, wherein multiple slice-presence-detecting sensors are mounted at different heights in the first segment (4) of the baling chamber (1).

5. The agricultural baler according to any one of the previous claims, wherein the slice-presence-detecting sensor (7) is formed as a force-sensor so that, in addition to the presence, also the force of contact between the slice (3) and the first segment (4) is measurable.

6. The agricultural baler according to any one of the previous claims, wherein the pre-compression chamber (2) comprises an inlet (10) and an outlet (11), the baler comprising a feeder for feeding crop material into said inlet (10), wherein said outlet (11) opens towards said first segment (4), said pre-compression chamber (2) comprising a pushing mechanism (12,22,23) for pushing said slice (3) through said outlet (11) into the baling chamber (1), whereby said controller (9) is provided for controlling the timing of said pushing mechanism (12,22,23).

7. Agricultural baler according to claim 6, wherein the pre-compression chamber (2) comprises two conveyors (22,23) defining a channel between the inlet (10) and the outlet (11), the two conveyors (22,23) being provided to form said slice (3) and to act as said pushing mechanism.

8. Agricultural baler according to claim 6, wherein said pushing mechanism is formed as a set of fingers (12) provided for grasping behind the slice (3) of crop material at the inlet (10) of the pre-compression chamber (2) and for pushing the slice through the outlet (11) by moving the fingers (12) towards the outlet (11).

9. Agricultural baler according to any one of the previous claims, wherein a plunger driving mechanism (13) is mechanically connected to a slice pushing driving mechanism (14) to synchronize the latter, the mechanical connection comprising an intermediary coupling element (17) steerable via said controller (9).

10. Agricultural baler according to claim 9, wherein said intermediary coupling element (17) is formed as a planetary gearbox.

11. Agricultural baler according to claim 9, wherein said intermediary coupling element is formed as a two part gearbox (17), the first part connecting one end via a straight gear coupling (16'), the second part connecting the other end via a helical gear coupling (15').

12. Agricultural baler according to any one of the claims 9-11, wherein the intermediary coupling element (17) is adapted to adjust the relative position of the plunger driving mechanism (13) and the slice pushing driving mechanism (14).

13. Agricultural baler according to any one of the claims 9-12, wherein an actuator is connected to said intermediary coupling element (17) to control the latter.

## Patentansprüche

1. Landwirtschaftliche Ballenpresse mit einer Presskammer (1) und einer Vorkammer (2), wobei die Vorkammer (2) dazu eingerichtet ist, Erntegut aufzusammeln und periodisch eine Scheibe (3) des Ernteguts zu bilden und die Scheibe zur Presskammer (1) hin in ein erstes Segment (4) der Presskammer (1) zu schieben, wobei die Presskammer (1) einen Presskolben (5) aufweist, der zur Hin- und Herbewegung (6) in der Presskammer (1) vorgesehen ist, wodurch Scheiben (3) von Erntegut zu einem Ballen gepresst werden,
**dadurch gekennzeichnet, dass**
ein Scheibenerkennungssensor (7) in einem oberen Bereich des ersten Segments (4) vorgesehen ist, wobei ein Ausgang des Sensors (7) wirksam mit einer Steuereinrichtung (9) verbunden ist, die dazu eingerichtet ist, eine Synchronisation zwischen dem periodischen Formen und Drücken der Scheibe (3) in die Vorkammer (2) und der Hin- und Herbewegung (6) des Presskolbens (5) einzustellen.

2. Landwirtschaftliche Ballenpresse nach Anspruch 1, wobei die Steuereinrichtung (9) dazu eingerichtet ist, eine Synchronisationssteuerung des periodischen Bildens und Schiebens der Scheibe (3) in die Vorkammer (2) bezüglich der Hin- und Herbewegung (6) des Presskolbens (5) einzustellen.

3. Landwirtschaftliche Ballenpresse nach Anspruch 1 oder 2, wobei der Scheibenerkennungssensor (7) an einer oberen Fläche des ersten Segments (4) der Presskammer (1) angebracht ist, um das Eintreffen der Scheibe (3) an der oberen Fläche zu erfassen.

4. Landwirtschaftliche Ballenpresse nach einem der vorhergehenden Ansprüche, wobei mehrere Scheibenerkennungssensoren in unterschiedlichen Höhen in dem ersten Segment (4) der Presskammer (1) angebracht sind.

5. Landwirtschaftliche Ballenpresse nach einem der vorhergehenden Ansprüche, wobei der Scheibenerkennungssensor (7) als ein Kraftsensor ausgebildet ist, so dass zusätzlich zu dem Vorhandensein auch die Kontaktkraft zwischen der Scheibe (3) und dem ersten Segment (4) messbar ist.

6. Landwirtschaftliche Ballenpresse nach einem der vorhergehenden Ansprüche, wobei die Vorkammer (2) einen Einlass (10) und einen Auslass (11) aufweist, wobei die Ballenpresse einen Zuführeinrichtung zum Zuführen von Erntegut in den Einlass (10) aufweist, wobei der Auslass (11) sich zu dem ersten Segment (4) hin öffnet, wobei die Vorkammer (2) einen Schiebemechanismus (12, 22, 23) zum Schieben der Scheibe (3) durch den Auslass (11) in die Presskammer (1) aufweist, wobei die Steuereinrichtung (9) zur zeitlichen Steuerung des Schiebemechanismus (12, 22, 23) vorgesehen ist.

7. Landwirtschaftliche Ballenpresse nach Anspruch 6, wobei die Vorkammer (2) zwei Förderbänder (22, 23) aufweist, die einen Kanal zwischen dem Einlass (10) und dem Auslass (11) definieren, wobei die beiden Förderbänder (22, 23) vorgesehen sind, um die Scheibe (3) zu bilden und um als Schiebemechanismus zu agieren.

8. Landwirtschaftliche Ballenpresse nach Anspruch 6, wobei der Schiebemechanismus als ein Satz von Fingern (12) ausgebildet ist, vorgesehen zum Greifen hinter die Scheibe (3) aus Erntegut am Einlass (10) der Vorkammer (2) und zum Schieben der Scheibe durch den Auslass (11) durch Bewegen der Finger (12) hin zum Auslass (11).

9. Landwirtschaftliche Ballenpresse nach einem der vorhergehenden Ansprüche, wobei ein Presskolbenantriebsmechanismus (13) mechanisch mit einem Scheibenschiebeantriebsmechanismus (14) gekoppelt ist, um letzteren zu synchronisieren, wobei die mechanische Verbindung ein dazwischen liegendes Koppelelement (17) aufweist, das mittels der Steuereinrichtung (9) steuerbar ist.

10. Landwirtschaftliche Ballenpresse nach Anspruch 9, wobei das dazwischenliegende Koppelelement (17) als ein Planetengetriebe ausgebildet ist.

11. Landwirtschaftliche Ballenpresse nach Anspruch 9, wobei das dazwischenliegende Koppelelement (17) als ein zweiteiliges Getriebe (17) ausgebildet ist, wobei der erste Teil ein Ende über eine geradverzahnte Kupplung (16') verbindet, wobei der zweite Teil das andere Ende über eine schrägverzahnte Kupplung (15') verbindet.

12. Landwirtschaftliche Ballenpresse nach einem der Ansprüche 9 bis 11, wobei das dazwischenliegende Koppelelement (17) dazu eingerichtet ist, die relative Position des Presskolbenantriebsmechanismus (13) und des Scheibenschiebeantriebsmechanismus (14) einzustellen.

13. Landwirtschaftliche Ballenpresse nach einem der Ansprüche 9 bis 12, wobei ein Aktor mit dem dazwischenliegenden Koppelelement (17) verbunden ist, um letzteres zu steuern.

## Revendications

1. Ramasseuse-presse à balles agricole comprenant une chambre de compression (1) et une chambre de pré-compression (2), dans laquelle la chambre de pré-compression (2) est adaptée pour collecter un matériau de récolte et pour former périodiquement une tranche (3) du dit matériau de récolte et pousser la tranche vers la chambre de compression (1) dans un premier segment (4) de la chambre de compression (1), la chambre de compression (1) comprenant un piston (5) agencé pour se déplacer en un mouvement de va-et-vient (6) dans la chambre de compression (1) en comprimant ainsi des tranches (3) de matériau de récolte pour former une balle, **caractérisé en ce qu'**un capteur de détection de présence de tranche (7) est agencé dans une région supérieure du dit premier segment (4), une sortie du dit capteur (7) étant fonctionnellement connectée à un contrôleur (9) qui est approprié pour régler une synchronisation entre la formation et poussée périodique de la tranche (3) dans la chambre de pré-compression (2) et le mouvement de va-et-vient (6) du piston (5).

2. Ramasseuse-presse à balles agricole selon la revendication 1, dans laquelle le contrôleur (9) est approprié pour régler un cadencement de synchronisation de la formation et poussée périodique de la tranche (3) dans la chambre de pré-compression (2) en rapport au mouvement de va-et-vient (6) du piston (5).

3. Ramasseuse-presse à balles agricole selon la revendication 1 ou 2, dans laquelle le capteur de détection de présence de tranche (7) est monté sur une surface supérieure du premier segment (4) de la chambre de compression (1) pour détecter l'arrivée de la tranche (3) au niveau de ladite surface supérieure.

4. Ramasseuse-presse à balles agricole selon l'une quelconque des revendications précédentes, dans laquelle plusieurs capteurs de détection de présence sont montés à différentes hauteurs dans le premier segment (4) de la chambre de compression (1).

5. Ramasseuse-presse à balles agricole selon l'une quelconque des revendications précédentes, dans laquelle le capteur de détection de présence de tranche (7) est constitué sous forme d'un capteur de force de telle sorte qu'en plus de la présence, la force de contact entre la tranche (3) et le premier segment (4) peut être mesurée.

6. Ramasseuse-presse à balles agricole selon l'une quelconque des revendications précédentes, dans laquelle la chambre de compression (2) comprend une entrée (10) et une sortie (11), la ramasseuse-presse à balles comprenant un dispositif d'alimentation pour alimenter du matériau de récolte dans ladite entrée (10), ladite sortie (11) s'ouvrant vers ledit premier segment (4), ladite chambre de pré-compression (2) comprenant un mécanisme de poussée (12, 22, 23) pour pousser ladite tranche (3) à travers ladite sortie (11) dans la chambre de compression (1), et dans laquelle ledit contrôleur (9) est agencé pour commander le cadencement du dit mécanisme de poussée (12, 22, 23).

7. Ramasseuse-presse à balles agricole selon la revendication 6, dans laquelle la chambre de compression (2) comprend deux transporteurs (22, 23) définissant un canal entre l'entrée (10) et la sortie (11), les deux transporteurs (22, 23) étant agencés pour former ladite tranche (3) et pour agir comme un dit mécanisme de poussée.

8. Ramasseuse-presse à balles agricole selon la revendication 6, dans laquelle ledit mécanisme de poussée est constitué sous forme d'un ensemble de doigts (12) agencés pour saisir par derrière la tranche (3) du matériau de récolte à l'entrée (10) de la chambre de pré-compression (2) et pour pousser la tranche à travers la sortie (11) en déplaçant les doigts (12) vers la sortie (11).

9. Ramasseuse-presse à balles agricole selon l'une quelconque des revendications précédentes, dans laquelle un mécanisme d'entraînement de piston (13) est connecté mécaniquement à un mécanisme d'actionnement de poussée de tranche (14) pour synchroniser ce dernier, la connexion mécanique comprenant un élément d'accouplement intermédiaire (17) dirigeable via ledit contrôleur (9).

10. Ramasseuse-presse à balles agricole selon la revendication 9, dans laquelle ledit élément d'accouplement intermédiaire (17) est constitué d'un engrenage planétaire.

11. Ramasseuse-presse à balles agricole selon la revendication 9, dans laquelle ledit élément d'accouplement intermédiaire est constitué d'un engrenage à deux parties (17), la première partie connectant une extrémité via un accouplement à engrenage droit (16'), et la seconde partie connectant l'autre extrémité via un accouplement à engrenage hélicoïdal (15').

12. Ramasseuse-presse à balles agricole selon l'une quelconque des revendications 9-11, dans laquelle élément d'accouplement intermédiaire (17) est approprié pour régler la position relative du mécanisme d'entraînement de piston (13) et du mécanisme d'actionnement de poussée de tranche (14).

13. Ramasseuse-presse à balles agricole selon l'une quelconque des revendications 9-12, dans laquelle un actionneur est connecté au dit élément d'accouplement intermédiaire (17) pour commander ce dernier.
